# EUROPEAN PATENT APPLICATION

(11) **EP 4 299 526 A1**
(43) Date of publication of application: **03.01.2024**
(21) Application number: 22759342.3
(22) Date of filing: 07.02.2022
(51) Int. Cl.: C01G 25/02, C08K 5/521, C08L 101/00, C08K 3/22

(54) **ZIRCONIUM ELEMENT-CONTAINING RESIN COMPOSITION**

(30) Priority: 26.02.2021 JP 2021030465
(71) Applicant: Sakai Chemical Industry Co., Ltd., Sakai-shi, Osaka 590-8502 (JP)
(72) Inventor: FUKUROI, Kappei, Sakai-shi, Osaka 590-0985 (JP); IEDA, Takuma, Sakai-shi, Osaka 590-0985 (JP); YAMAUCHI, Toyonao, Sakai-shi, Osaka 590-0985 (JP); TAKETSUNA, Hirotaka, Sakai-shi, Osaka 590-0985 (JP); SHIKIDA, Takashi, Sakai-shi, Osaka 590-0985 (JP); IKESHITA, Shinji, Sakai-shi, Osaka 590-0985 (JP); OGATA, Hironobu, Sakai-shi, Osaka 590-0985 (JP)
(74) Representative: Cabinet Beau de Loménie
(86) International application number: PCT/JP2022/004629
(87) International publication number: WO 2022/181302

(57) **Abstract**

The present invention provides a zirconium element-containing resin composition capable of achieving both high transparency and a high refractive index. The present invention is a zirconium element-containing resin composition containing a zirconium element-containing metal oxide (A); a dispersant (B); and a polymerizable resin (C), in which the zirconium element-containing metal oxide (A) has an average particle diameter of 20 nm or less as measured by a dynamic light scattering method, and the dispersant (B) contains a compound represented by the following formula (1), the zirconium element-containing resin composition may contain a silane coupling agent, and a content ratio of the silane coupling agent is less than 30 parts by mass with respect to 100 parts by mass of a total of the compound represented by the formula (1) and the silane coupling agent.

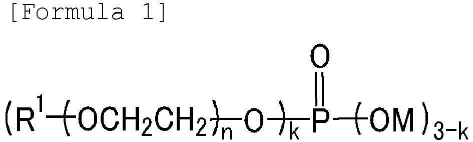

## Description

### TECHNICAL FIELD

The present invention relates to a zirconium element-containing resin composition. More specifically, the present invention relates to a zirconium element-containing resin composition useful for optical materials and the like.

### BACKGROUND ART

Conventionally, a resin composition having high transparency and a high refractive index has been widely used as an optical material, and such a resin composition is also used as a material of an antireflection film, an optical adhesive, or the like used in an electronic device. In recent years, electronic devices have been further thinned, and resin compositions used for materials such as antireflection films and optical adhesives are required to be excellent in transparency and capable of achieving a sufficiently high refractive index even with a thin film.

Conventionally, a method of dispersing a metal oxide having a high refractive index such as zirconium oxide is known for increasing the refractive index of a resin. In order to enhance the transparency of the resin, a metal oxide used for a resin for an optical material is required to have a considerably fine particle diameter and high dispersibility in a resin composition.

As a method of improving the dispersibility of the metal oxide in the resin composition, a method is well known in which zirconium oxide particles are modified to be lipophilic by surface treatment of zirconium oxide using a silane coupling agent so as to be compatible with an organic solvent and a resin. Regarding such a technique, for example, Patent Document 1 proposes that a silane coupling agent is added to an organic solvent dispersion of zirconium oxide particles, the zirconium oxide particles are surface-treated, a dispersion medium is removed, and then (meth)acrylates are added to obtain a polymerizable composition containing the zirconium oxide particles.

Patent Document 2 proposes a polymerization composition using a silane coupling agent and a polyoxyethylene alkyl ether phosphate anion activator in combination at a predetermined ratio as a surface treatment agent for zirconium oxide.

### CITATION LIST

### - Patent Literature

Patent Literature 1: JP 2011-201740 A
Patent Literature 2: JP 2016-210948 A

### SUMMARY OF INVENTION

### - Technical Problem

As described above, various polymerizable resin compositions using a zirconium element have been conventionally developed; however, the conventional zirconium element-containing resin composition is not sufficient in achieving both transparency and refractive index, and there is room for improvement.

The present invention has been made in view of the above current situation, and an object thereof is to provide a zirconium element-containing resin composition capable of achieving both high transparency and a refractive index.

### - Solution to Problem

The present inventor has conducted various studies on a resin composition using a zirconium element, and resultantly found that a resin composition which contains a zirconium element-containing metal oxide having an average particle diameter of 20 nm or less and a dispersant having a predetermined structure and in which a content ratio of a silane coupling agent is less than a predetermined amount exhibits both high transparency and a refractive index, and the present inventor has arrived at an admirable solution to the problem and has reached the present invention.

That is, the present invention is a zirconium element-containing resin composition comprising: a zirconium element-containing metal oxide (A); a dispersant (B); and a polymerizable resin (C), the zirconium element-containing metal oxide (A) having an average particle diameter of 20 nm or less as measured by a dynamic light scattering method, the dispersant (B) comprising a compound represented by the following formula (1):

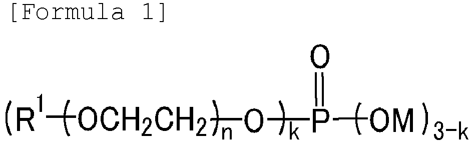

(wherein R¹ represents an alkyl group having 1 to 8 carbon atoms, M is the same or different and represents a hydrogen atom, a metal ion, an ammonium ion, or an organic amine group, n satisfies 1 ≤ n ≤ 5, k satisfies 0 < k ≤ 3), wherein the dispersant (B) may comprise a silane coupling agent, and a content ratio of the silane coupling agent is less than 30 parts by mass with respect to 100 parts by mass of a total of the compound represented by the formula (1) and the silane coupling agent.

In the zirconium element-containing resin composition, a content ratio of the zirconium element-containing metal oxide (A) is preferably 70 parts by mass or more with respect to 100 parts by mass of a solid content in the composition.

In the zirconium element-containing resin composition, a content ratio of the compound represented by the formula (1) is preferably 2 to 20 parts by mass with respect to 100 parts by mass of the zirconium element-containing metal oxide (A).

In the zirconium element-containing resin composition, the content ratio of the compound represented by the formula (1) is preferably 1 to 15 parts by mass with respect to 100 parts by mass of the solid content in the composition.

In the zirconium element-containing resin composition, the content ratio of the polymerizable resin (C) is preferably 10 to 25 parts by mass with respect to 100 parts by mass of the solid content in the composition.

The present invention is also a cured product obtained by curing the zirconium element-containing resin composition.

### - Advantageous Effects of Invention

The zirconium element-containing resin composition of the present invention has the above-described configuration, can achieve both high transparency and a high refractive index, and thus can be suitably used for optical materials and the like.

### DESCRIPTION OF EMBODIMENTS

A preferred embodiment of the present invention will be specifically described below, but the present invention is not limited to the following description, and modification may be suitably made without departing from the gist of the present invention. The combination of two or three or more of preferred embodiments of the present invention described below also corresponds to a preferred embodiment of the present invention.

A zirconium element-containing resin composition of the present invention comprises a zirconium element-containing metal oxide (A) and a dispersant (B) represented by the formula (1). Thus, the zirconium element-containing metal oxide (A) is excellent in dispersibility in the resin composition, and the zirconium element-containing resin composition has high transparency and a high refractive index. Since the zirconium element-containing resin composition of the present invention can maintain a high refractive index even when cured, it can be suitably used for optical material applications.

The zirconium element-containing resin composition may comprise a silane coupling agent as the dispersant (B), and a content ratio of the silane coupling agent is less than 30 parts by mass with respect to 100 parts by mass of the total of the compound represented by the formula (1) and the silane coupling agent. Since the silane coupling agent has a refractive index lower than that of a general resin, when an amount of the silane coupling agent is large, the refractive index is low; however, when the ratio of the silane coupling agent is within the above range, the refractive indexes of the resin composition and the cured product can be increased. The content ratio of the silane coupling agent with respect to 100 parts by mass of the total of the compound represented by the formula (1) and the silane coupling agent is preferably 25 parts by mass or less, more preferably 20 parts by mass or less, still more preferably 15 parts by mass or less, even more preferably 10 parts by mass or less, particularly preferably 5 parts by mass or less, and most preferably 0 parts by mass.

In the zirconium element-containing resin composition, a content ratio of the zirconium element-containing metal oxide (A) is not particularly limited, and is preferably 70 parts by mass or more with respect to 100 parts by mass of a solid content in the composition. This makes it possible to further improve the refractive index of the resin composition. The content ratio of the zirconium element-containing metal oxide (A) is more preferably 72 parts by mass or more, still more preferably 73 parts by mass or more, particularly preferably 75 parts by mass or more.

The content ratio of the zirconium element-containing metal oxide (A) is preferably 90 parts by mass or less, and more preferably 85 parts by mass or less with respect to 100 parts by mass of the solid content in the composition.

That is, the content ratio of the zirconium element-containing metal oxide (A) with respect to 100 parts by mass of the solid content in the composition is preferably 70 to 90 parts by mass, more preferably 72 to 88 parts by mass, still more preferably 73 to 85 parts by mass, particularly preferably 75 to 83 parts by mass.

In the zirconium element-containing resin composition, the content ratio of the compound represented by the formula (1) is not particularly limited, and is preferably 2 to 20 parts by mass with respect to 100 parts by mass of the zirconium element-containing metal oxide (A). As a result, the effect of the present invention can be more sufficiently exhibited. The content ratio of the compound represented by the formula (1) to the zirconium element-containing metal oxide (A) is more preferably 2 to 15 parts by mass, and still more preferably 5 to 15 parts by mass.

In the zirconium element-containing resin composition, the content ratio of the compound represented by the formula (1) is also preferably 1 to 15 parts by mass with respect to 100 parts by mass of the solid content in the composition. The content ratio of the compound represented by the formula (1) to the solid content in the composition is more preferably 3 to 12 parts by mass and still more preferably 6 to 8 parts by mass.

The solid content in the present specification is obtained by removing a volatile component such as a solvent from the zirconium element-containing resin composition, and means a component that constitutes a cured product when cured.

In the zirconium element-containing resin composition, the content ratio of the polymerizable resin (C) is not particularly limited, and is preferably 10 to 25 parts by mass with respect to 100 parts by mass of the solid content in the composition. As a result, the effect of the present invention can be more sufficiently exhibited. The content ratio of the compound represented by the formula (1) is more preferably 12 to 22 parts by mass, still more preferably 12 to 18 parts by mass, particularly preferably 12 to 14 parts by mass.

The zirconium element-containing resin composition may comprise other components described later as necessary in addition to the zirconium element-containing metal oxide (A), the dispersant (B), and the polymerizable resin (C). A content ratio of the other components is preferably 0 to 10 parts by mass with respect to 100 parts by mass of the solid content in the composition. The content is more preferably 0 to 5 parts by mass, and still more preferably 0 to 2 parts by mass.

Hereinafter, essential components and optional components comprised in the zirconium element-containing resin composition of the present invention will be further described.

### <Zirconium element-containing metal oxide (A)>

The zirconium element-containing metal oxide (A) is not particularly limited as long as it is mainly composed of a component including a zirconium element and an oxygen atom, and may contain other elements other than the zirconium element and the oxygen atom.

The main component in the present specification means 70 parts by mole or more of component with respect to 100 parts by mole of the zirconium element-containing metal oxide (A). A content ratio of the component having a zirconium element and an oxygen atom is preferably 80 to 100 parts by mole with respect to 100 parts by mole of the zirconium element-containing metal oxide (A). The content ratio is more preferably 90 to 100 parts by mole.

Examples of other elements include at least one stabilizing element selected from aluminum, magnesium, titanium, and rare earth elements. When the zirconium element-containing metal oxide (A) contains the other elements, thermal stability of the zirconium element-containing metal oxide (A) is further improved. Specific examples of the rare earth element include yttrium.

A content ratio of the other elements in the zirconium element-containing metal oxide (A) is preferably 0 to 20 parts by mole with respect to 100 parts by mole of zirconium. The content ratio is more preferably 0 to 10 parts by mole.

An embodiment in which the zirconium element-containing metal oxide (A) is zirconium oxide is one of preferred embodiments of the present invention.

An embodiment in which the zirconium element-containing metal oxide (A) is a composite oxide containing yttrium is also one of preferred embodiments of the present invention.

The zirconium element-containing metal oxide (A) has an average particle diameter of 20 nm or less as measured by a dynamic light scattering method. Thereby, the transparency of the resin can be sufficiently enhanced. The average particle diameter is preferably 18 nm or less, more preferably 15 nm or less, still more preferably 12 nm or less, even more preferably 10 nm or less, further more preferably 9 nm or less, particularly preferably 8 nm or less. In addition, the average particle diameter is preferably 1 nm or more, more preferably 2 nm or more, and still more preferably 3 nm or more.

That is, the average particle diameter is preferably 1 to 20 nm, more preferably 1 to 18 nm, still more preferably 1 to 15 nm, even more preferably 2 to 12 nm, further more preferably 2 to 10 nm, particularly preferably 3 to 9 nm, and most preferably 3 to 8 nm.

The average particle diameter is measured by a dynamic light scattering method, and specifically, can be measured by the method described in Examples.

The zirconium element-containing metal oxide (A) preferably has an average primary particle diameter of 1 to 20 nm as measured by TEM (transmission electron microscope), and such an embodiment is also one of preferred embodiments of the present invention.

### <Dispersant (B)>

The dispersant (B) comprises a compound represented by the following formula (1);

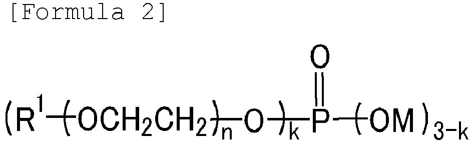

(wherein R¹ represents an alkyl group having 1 to 8 carbon atoms, M is the same or different and represents a hydrogen atom, a metal ion, an ammonium ion, or an organic amine group, n satisfies 1 ≤ n ≤ 5, k satisfies 0 < k ≤ 3).

In the formula (1), R¹ represents an alkyl group having 1 to 8 carbon atoms.

The alkyl group having 1 to 8 carbon atoms is not particularly limited, and examples thereof include a methyl group, an ethyl group, a n-propyl group, a n-butyl group, an i-propyl group, a sec-butyl group, an i-butyl group, a t-butyl group, a n-pentyl group (amyl group), a n-hexyl group, a n-heptyl group, a n-octyl group, a 1-methylbutyl group, a 1-ethylpropyl group, a 2-methylbutyl group, an i-amyl group, a neopentyl group, a 1,2-dimethylpropyl group, a 1,1-dimethylpropyl group, a t-amyl group, a 1,3-dimethylbutyl group, a 3,3-dimethylbutyl group, a 2-ethylbutyl group, a 2-ethyl-2-methylpropyl group, a 1-methylheptyl group, a 2-ethylhexyl group, a 1,5 dimethylhexyl group, and a t-octyl group.

The number of carbon atoms of the alkyl group is preferably 1 to 6, more preferably 1 to 5, still more preferably 1 to 3, particularly preferably 1 to 2, and most preferably 1.

In the formula (1), n is a number satisfying 1 ≤ n ≤ 5. Preferably, n satisfies 1 ≤ n ≤ 4.

In the formula (1), M is the same or different and represents a hydrogen atom, a metal ion, an ammonium ion, or an organic amine group.

The metal atom is not particularly limited, and examples thereof include alkali metals such as Li, Na, and K, and alkaline earth metals such as Mg and Ca.

M is preferably a hydrogen atom.

In the formula (1), k is a number satisfying 0 < k ≤ 3, and preferably k is 1 or 2.

### <Polymerizable resin (C)>

The polymerizable resin (C) is not limited, and can be appropriately selected according to the use and required characteristics of the resulting resin composition. Specific examples of the polymerizable resin (C) include polyolefin resins which are homopolymers or copolymers of olefin such as polyethylene, polypropylene, an ethylene-propylene copolymer, an ethylene-propylene-diene monomer terpolymer, an ethylene-butene copolymer, an ethylene-acrylic acid ester (for example, ethyl acrylate) copolymer, an ethylene-vinyl acetate copolymer, and an ethylene-methyl methacrylate copolymer; fluorine-based resins such as polytetrafluoroethylene; homopolymers of aromatic vinyl monomer such as styrene or copolymers such as ABS resin; poly(meth)acrylic resins; polyesters such as polyethylene terephthalate, polybutylene terephthalate, and polyarylate; polyamides such as 6-nylon, 6,6-nylon, 12-nylon, 46-nylon, and aromatic polyamide; polyether such as polyphenylene ether, modified polyphenylene ether, or polyoxymethylene; polycarbonate; elastomers such as styrene-conjugated diene copolymer, polybutadiene, polyisoprene, acrylonitrile-butadiene copolymer, and polychloroprene; polyvinyl chloride; crosslinked polymers obtained by polymerizing and crosslinking a polyfunctional (meth)acrylate such as pentaerythritol (tri/tetra) (meth)acrylate or dipentaerythritol hexa(meth)acrylate or a crosslinkable composition containing the same; thermosetting resins such as phenol resins, epoxy resins such as bisphenol A type epoxy resins, unsaturated polyesters, and polyurethanes; and silicone resins. These resins can be used singly or in combination of two or more kinds thereof.

The polymerizable resin (C) is preferably a crosslinked polymer obtained by polymerizing and crosslinking a polyfunctional (meth)acrylate or a crosslinkable composition containing the polyfunctional (meth)acrylate, an epoxy resin, or polyurethane.

From the viewpoint of dispersibility of zirconium oxide particles, the polymerizable resin is preferably a crosslinked polymer or a poly (meth)acrylic resin obtained by polymerizing and crosslinking a polyfunctional (meth)acrylate or a crosslinkable composition containing the polyfunctional (meth)acrylate.

### <Silane coupling agent>

The zirconium element-containing resin composition of the present invention may contain a silane coupling agent, and the silane coupling agent is not particularly limited as long as it is an organosilicon compound having a hydrolyzable group, and is, for example, preferably a compound represented by the following formula (2);

R²ₘ - Si - X₄₋ₘ (2)

(wherein R² represents a non-reactive group or a group containing a reactive functional group. X represents a hydrolyzable group or a hydroxy group. m is a number of 1 to 3.).

Examples of the non-reactive group include an alkyl group, a cycloalkyl group, a halogenated alkyl group, a phenyl group, and an alkylphenyl group.

Examples of the group containing a reactive functional group include groups containing an amino group, an epoxy group, a vinyl group, a mercapto group, a halogen atom, a (meth)acryloyl group, and the like.

Examples of the non-reactive silane coupling agent having a non-reactive group include methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, isobutyltrimethoxysilane, butyltrimethoxysilane, hexyltrimethoxysilane, decyltrimethoxysilane, butyltriethoxysilane, isobutyltriethoxysilane, hexyltriethoxysilane, octyltriethoxysilane, decyltriethoxysilane, 3,3,3-trifluoropropyltrimethoxysilane, methyl-3,3,3-trifluoropropyldimethoxysilane, perfluorooctylethyltrimethoxysilane, perfluorooctylethyltriethoxysilane, perfluorooctylethyltriisopropoxysilane, trifluoropropyltrimethoxysilane, and dimethylmethoxysilane.

Examples of the reactive silane coupling agent having a group including a reactive functional group include N-2-(aminoethyl)-3-aminopropyltrimethoxysilane, vinyltrimethoxysilane, vinyltriethoxysilane, vinyltris(β-methoxyethoxy)silane, β-(3,4-epoxycyclohexyl)ethyltrimethoxysilane, γ-glycidoxymethyltrimethoxysilane, γ-glycidoxymethyltriethoxysilane, γ-glycidoxyethyltrimethoxysilane, γ-glycidoxyethyltriethoxysilane, γ-glycidoxypropyltrimethoxysilane, γ-glycidoxypropyltriethoxysilane, γ-(β-glycidoxyethoxy)propyltrimethoxysilane, γ-(meth)acryloyloxymethyltrimethoxysilane, γ-(meth)acryloyloxymethyltriethoxysilane, γ-(meth)acryloyloxyethyltrimethoxysilane, γ-(meth)acryloyloxyethyltriethoxysilane, γ-(meth)acryloyloxypropyltrimethoxysilane, γ-(meth)acryloyloxypropyltriethoxysilane, γ-mercaptopropyltrimethoxysilane, p-styryltrimethoxysilane, and methyltrichlorosilane.

### <Other components>

The component other than the zirconium element-containing metal oxide (A), the dispersant (B), and the polymerizable resin (C) is not particularly limited, and examples thereof include a solvent, a polymerization initiator, a curing agent, a plasticizer, a lubricant, a filler, an antioxidant, a heat stabilizer, a nucleating agent, a crosslinking agent, a crosslinking aid, a coupling agent, an antistatic agent, a compatibilizer, a light resistance agent, a pigment, a foaming agent, and an antifungal agent.

The solvent is not particularly limited, and examples thereof include aliphatic alcohols having 1 to 3 carbon atoms such as methanol, ethanol, and 2-propanol; glycol ethers having 4 to 6 carbon atoms such as propylene glycol monomethyl ether, and propylene glycol monomethyl ether acetate; aliphatic carboxylic acid esters having 2 to 8 carbon atoms such as ethyl acetate, butyl acetate, and methyl formate; aliphatic ketones having 3 to 6 carbon atoms such as acetone, methyl ethyl ketone, and methyl isobutyl ketone, polyhydric alcohols having 2 to 3 carbon atoms such as ethylene glycol and glycerin, and mixtures thereof.

The polymerization initiator is not particularly limited, and examples thereof include a photopolymerization initiator and a thermal polymerization initiator.

Examples of the photopolymerization initiator include benzophenone, benzoin methyl ether, benzoin propyl ether, diethoxyacetophenone, 1-hydroxycyclohexyl phenyl ketone, 2,6-dimethylbenzoyldiphenylphosphine oxide, and 2,4,6-trimethylbenzoyldiphenylphosphine oxide. Among them, 1-hydroxycyclohexyl phenyl ketone is preferable.

Examples of the thermal polymerization initiator include hydroperoxides such as hydroperoxide, t-butyl hydroperoxide, diisopropylbenzene hydroperoxide, and 1,1,3,3-tetramethylbutyl hydroperoxide; dialkyl peroxides such as di-t-butyl peroxide and dicumyl peroxide; peroxyesters such as t-butyl peroxybenzoate and t-butylperoxy (2-ethylhexanoate); diacyl peroxides such as benzoyl peroxide; peroxycarbonates such as diisopropyl peroxycarbonate; and peroxides such as peroxyketal and ketone peroxide.

The curing agent can be appropriately selected according to the resin and the like to be used, and examples thereof include amine curing agents such as aliphatic polyamines, modified aliphatic polyamines, alicyclic amines, modified alicyclic amines, and aromatic amines.

The present invention is also a cured product obtained by curing the zirconium element-containing resin composition of the present invention.

Since the cured product has a high refractive index and high transparency, it can be suitably used for optical materials such as antireflection films and optical adhesives.

The present invention is also a method of producing an optical material including a step of curing the zirconium element-containing resin composition of the present invention.

The present invention is also a use of the zirconium element-containing resin composition of the present invention in the production of the optical material.

The cured product is preferably a cured film obtained by coating on a base material.

A film thickness of the cured film is not particularly limited, and is preferably 1 nm to 5 mm. The film thickness is more preferably 1 nm to 3 mm.

Since the cured product of the present invention has excellent transparency, the cured product has excellent transparency even when the thickness of the cured film is 10 um or more.

As the refractive index of the cured product of the present invention, the refractive index at a wavelength of 589 nm is preferably 1.6 or more. The refractive index is more preferably 1.65 or more, and still more preferably 1.7 or more.

A difference in refractive index at a wavelength of 589 nm between the cured product of the present invention and a cured product of only a resin without using the zirconium element-containing resin composition of the present invention is preferably 0.15 or more. The difference in refractive index is more preferably 0.20 or more, and still more preferably 0.25 or more.

The refractive index of the cured product can be measured by the method described in Examples.

The method of producing the cured product is not particularly limited, and the cured product can be produced by curing the zirconium element-containing resin composition of the present invention by a commonly used method.

Specific examples of the curing method include thermal curing and photocuring.

### EXAMPLES

The present invention is described below in more detail based on Examples. The examples, however, are not intended to limit the scope of the present invention. Unless otherwise specified, "parts" means "parts by mass", and "%" means "mass %".

1. Various properties of the obtained zirconium element-containing resin composition and cured film were evaluated as follows.

### (1) Average particle diameter of zirconium element-containing metal oxide particles

D50 was measured by a dynamic light scattering method (UPA-UT manufactured by Nikkiso Co., Ltd.).

The average primary particle size was measured by TEM (transmission electron microscope) under the following conditions.

Measuring apparatus: field emission transmission electron microscope JEM-2100F manufactured by JEOL Ltd.

Acceleration voltage: 200 kV

Magnification: 250,000 times or 500,000 times

### (2) The appearance of the zirconium element-containing resin composition was evaluated according to the following criteria.

Good: Transparent and flowable.

Poor: Thickening occurs, and it is difficult to form a coating film.

### (3) Film thickness of zirconium element-containing resin cured film (cured product)

The film thickness of the obtained cured film was measured by a digimatic indicator (ID-H0530 manufactured by Mitutoyo Corporation).

### (4) Total light transmittance of zirconium element-containing resin cured film (cured product), Haze

The total light transmittance and haze of the obtained cured film were measured by a haze meter (NDH 4000 manufactured by DENSHOKU INDUSTRIES Co., Ltd.).

### (5) Cracking and adhesion of zirconium element-containing resin cured film (cured product)

The appearance of the obtained cured film was visually confirmed. The cured product was evaluated as "very good" when no cracking or deterioration of adhesion (peeling from the base material) of a film surface was observed, the cured product was evaluated as "good" when cracking or deterioration of adhesion (peeling from the base material) of the film surface was observed at several points, and the cured product was evaluated as "poor" when many cracks or deterioration of adhesion (peeling from the base material) of the film surface were observed and the cured product was not molded as a film.

### (6) Refractive index of zirconium element-containing resin cured film (cured product)

The refractive index of the obtained cured film was measured at a wavelength of 589 nm using an ellipsometer (M-2000 manufactured by J.A. Woollam Corporation).

A silicon wafer was used as a base material, and the zirconium element-containing resin composition was applied by a spin coater.

### 2. Production example of dispersant (B)

### (Compound 1B)

A 1000 mL four-necked flask was replaced with nitrogen, and then charged with 160.8 g (2.1 mol) of ethylene glycol monomethyl ether (manufactured by Tokyo Chemical Industry Co., Ltd.), and under a nitrogen atmosphere, added with 100.0 g (0.7 mol) of phosphoric anhydride (manufactured by Tokyo Chemical Industry Co., Ltd.) (molar ratio; phosphoric anhydride : ethylene glycol monomethyl ether = 1 : 3). The mixture was heated and stirred at 85°C for 6 hours to obtain 260.8 g of monooxyethylene monomethyl ether phosphate (the number of carbon atoms of R¹ in the formula (1) is 1, and n = 1). The obtained phosphate was defined as a compound 1B.

### (Compounds 2B to 7B)

A polyoxyethylene alkyl ether phosphate was obtained in the same manner as in the compound 1B except that ethylene glycol monomethyl ether was changed to diethylene glycol monomethyl ether, ethylene glycol monobutyl ether, triethylene glycol monomethyl ether, diethylene glycol monobutyl ether, tetraethylene glycol monomethyl ether, or triethylene glycol monobutyl ether. The obtained polyoxyethylene alkyl ether phosphate was defined as a compound 2B, a compound 3B, a compound 4B, a compound 5B, a compound 6B, and a compound 7B. The carbon number and n of R¹ in the formula (1) are shown in Table 1.

### 3. Production of zirconium element-containing resin composition and cured film (cured product)

### (Example 1)

To 38.8 g of a methanol dispersion SZR-GM (manufactured by Sakai Chemical Industry Co., Ltd., zirconium oxide concentration: 30.9%, average particle diameter of zirconium oxide by dynamic light scattering method: 8 nm) of zirconium oxide particles as the zirconium element-containing metal oxide (A), 1.2 g of the compound 1B (10 parts with respect to 100 parts of zirconium oxide particles) was added, and then 4.0 g of propylene glycol monomethyl ether (hereinafter, also referred to as PGME) and 2.8 g of pentaerythritol (tri/tetra) acrylate (PETRA manufactured by Daicel-Allnex Ltd.) were added to prepare a mixture. Methanol in a dispersion medium was distilled off from the mixture by an evaporator to obtain a zirconium element-containing resin composition 1 containing a solvent.

0.9 parts of a photopolymerization initiator (BASF Japan Ltd., Irgacure 184) was added with respect to a solid concentration of 100 parts of the obtained zirconium element-containing resin composition 1, and then the resultant was applied onto a surface of a glass plate as a base material using an applicator. Thereafter, the solvent was volatilized by air-drying overnight, and the zirconium element-containing resin composition was cured by irradiating light using a UV lamp. As a result, a zirconium element-containing resin cured film 1 was obtained.

### (Examples 2 to 13)

Zirconium element-containing resin compositions 2 to 13 and zirconium element-containing resin cured films 2 to 13 were obtained in the same manner as in Example 1 except that the type and the addition amount of the dispersant and the filling amount of the zirconium element-containing metal oxide (A) were changed as shown in Table 1.

### (Example 14)

To 40.0 g of a methanol dispersion SZR-M (manufactured by Sakai Chemical Industry Co., Ltd., composite oxide concentration: 30.3%, average particle diameter of zirconium oxide by dynamic light scattering method: 3 nm) of a zirconium composite oxide containing yttrium as the zirconium element-containing metal oxide (A), 1.2 g of the compound 7B (10 parts with respect to 100 parts of zirconium oxide particles) was added, and then 3.9 g of PGME and 2.9 g of dipentaerythritol hexaacrylate (DPHA manufactured by Daicel-Allnex Ltd.) were added to prepare a mixture. Methanol in a dispersion medium was distilled off from the mixture by an evaporator to obtain a zirconium element-containing resin composition 14 containing a solvent.

1.1 parts of a photopolymerization initiator (BASF Japan Ltd., Irgacure 184) was added with respect to a solid concentration of 100 parts of the obtained zirconium element-containing resin composition 14, and then the resultant was applied onto a surface of a glass plate as a base material using an applicator. Thereafter, the solvent was volatilized by air-drying overnight, and the zirconium element-containing resin composition was cured by irradiating light using a UV lamp. As a result, a zirconium element-containing resin cured film 14 was obtained.

### (Example 15)

To 48.5 g of the methanol dispersion SZR-GM (manufactured by Sakai Chemical Industry Co., Ltd., zirconium oxide concentration: 30.9%, average particle diameter of zirconium oxide by dynamic light scattering method: 8 nm) of zirconium oxide particles as the zirconium element-containing metal oxide (A), 1.5 g of the compound 6B (10 parts with respect to 100 parts of zirconium oxide particles) was added, and then 3.2 g of bisphenol A type epoxy resin intermediate (EPICLON 850 manufactured by DIC Corporation) and 1.8 g of propylene glycol monomethyl ether acetate (hereinafter, also referred to as PGMEA) were added to prepare a mixture. Methanol in a dispersion medium was distilled off from the mixture by an evaporator, and 0.4 g of a modified aliphatic polyamine (LUCKAMIDEWH-614 manufactured by DIC Corporation) was added to obtain a zirconium element-containing resin composition 15 containing a solvent.

The obtained zirconium element-containing resin composition 15 was air-dried overnight to volatilize the solvent. Thereafter, the composition was held in a dryer set at 80°C for 16 hours to be thermally cured. As a result, a zirconium element-containing resin cured product 15 was obtained.

### (Example 16)

To 10.0 g of a methanol dispersion SZR-CW (manufactured by Sakai Chemical Industry Co., Ltd., zirconium oxide concentration: 30.5%, average particle diameter of zirconium oxide by dynamic light scattering method: 6 nm) of zirconium oxide particles as the zirconium element-containing metal oxide (A), 0.3 g of the compound 7B (10 parts with respect to 100 parts of zirconium oxide particles) and a urethane resin (Adeka Bontiter HUX 561S manufactured by ADEKA CORPORATION, solid content concentration: 36.10) were added, and then the resultant was applied onto a PET film as a base material with an applicator. Thereafter, the resultant was air-dried overnight and then held in a dryer set at 120°C for 1 hour to be thermally cured. As a result, a zirconium element-containing resin cured product 16 was obtained.

### (Comparative Example 1)

To 39.6 g of the methanol dispersion SZR-M (manufactured by Sakai Chemical Industry Co., Ltd., zirconium oxide concentration: 30.3%, average particle diameter of zirconium oxide by dynamic light scattering method: 3 nm) of zirconium oxide particles, 1.2 g of polyoxyethylene alkyl ether phosphate (TOHO Chemical Industry Co., Ltd., RS-710) (10 parts with respect to 100 parts of zirconium oxide particles) was added, and then 3.9 g of PGME and 2.9 g of dipentaerythritol hexaacrylate (DPHA manufactured by Daicel-Allnex Ltd.) were added to prepare a mixture. Methanol in a dispersion medium was distilled off from the mixture by an evaporator to obtain a comparative zirconium element-containing resin composition 1, and the resin composition was thickened by aggregation of zirconium oxide particles. As a result, it was difficult to form a coating film of the obtained resin composition.

### (Comparative Example 2)

To 38.8 g of the methanol dispersion of zirconium oxide particles, 1.2 g of polyoxyethylene alkyl ether phosphate (TOHO Chemical Industry Co., Ltd., RS-410) (10 parts with respect to 100 parts of zirconium oxide particles) was added, and then 5.0 g of PGME and 1.8 g of pentaerythritol (tri/tetra) acrylate (PETRA manufactured by Daicel-Allnex Ltd.) were added to prepare a mixture. Methanol in a dispersion medium was distilled off from the mixture by an evaporator to obtain a comparative zirconium element-containing resin composition 2, and the resin composition was thickened and clouded by aggregation of zirconium oxide particles. As a result, the obtained resin composition could not be formed into a coating film.

### (Comparative Example 3)

A mixture was obtained in the same manner as in Comparative Example 1 except that the type and the addition amount of the dispersant and the filling amount of the zirconium element-containing metal oxide (A) were changed as shown in Table 1. Then, methanol in a dispersion medium was distilled off from the obtained mixture by an evaporator to obtain a comparative zirconium element-containing resin composition 3, and the resin composition was thickened and clouded by aggregation of zirconium oxide particles. As a result, the obtained resin composition could not be formed into a coating film.

The zirconium element-containing resin compositions 1 to 16 and the zirconium element-containing resin cured films 1 to 14 and 16, the zirconium element-containing resin cured product 15 obtained in Examples 1 to 16, and the comparative zirconium element-containing resin compositions 1 to 3 obtained in Comparative Examples 1 to 3 were evaluated as described above. The results are shown in Table 1. In Table 1, the zirconium element-containing metal oxide (A) is described as the metal oxide (A).

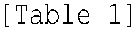

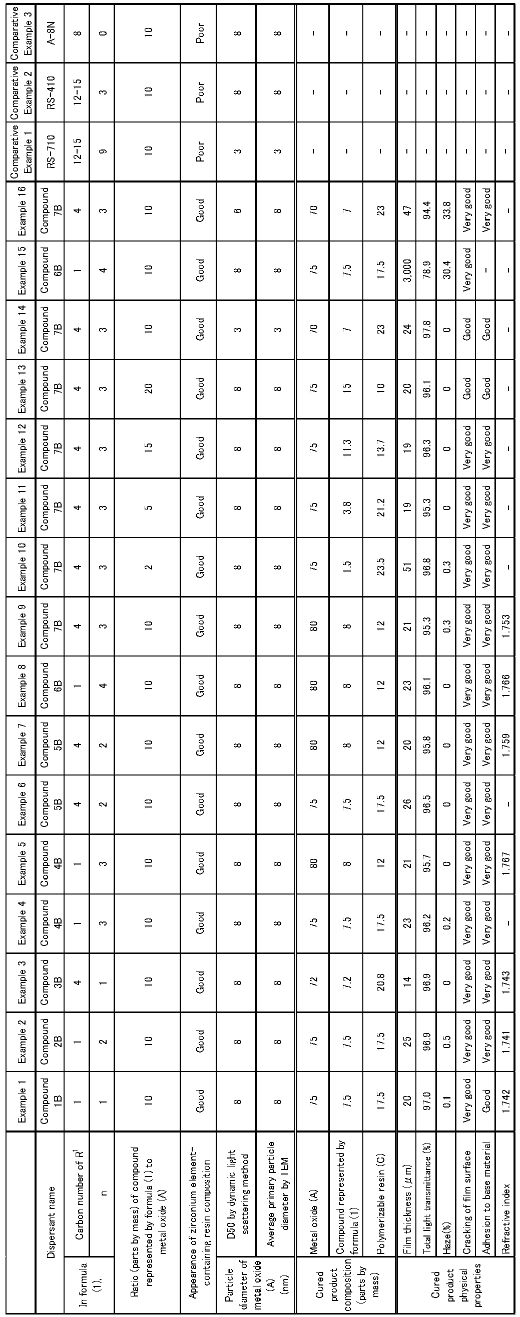

## Claims

1. A zirconium element-containing resin composition comprising: a zirconium element-containing metal oxide (A); a dispersant (B); and a polymerizable resin (C),
the zirconium element-containing metal oxide (A) having an average particle diameter of 20 nm or less as measured by a dynamic light scattering method,
the dispersant (B) comprising a compound represented by the following formula (1): 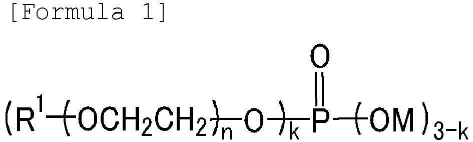 (wherein R¹ represents an alkyl group having 1 to 8 carbon atoms, M is the same or different and represents a hydrogen atom, a metal ion, an ammonium ion, or an organic amine group, n satisfies 1 ≤ n ≤ 5, k satisfies 0 < k ≤ 3),
wherein
the dispersant (B) may comprise a silane coupling agent, and
a content ratio of the silane coupling agent is less than 30 parts by mass with respect to 100 parts by mass of a total of the compound represented by the formula (1) and the silane coupling agent.

2. The zirconium element-containing resin composition according to claim 1, wherein a content ratio of the zirconium element-containing metal oxide (A) is 70 parts by mass or more with respect to 100 parts by mass of a solid content in the composition.

3. The zirconium element-containing resin composition according to claim 1 or 2, wherein a content ratio of the compound represented by the formula (1) is 2 to 20 parts by mass with respect to 100 parts by mass of the zirconium element-containing metal oxide (A).

4. The zirconium element-containing resin composition according to any one of claims 1 to 3, wherein the content ratio of the compound represented by the formula (1) is 1 to 15 parts by mass with respect to 100 parts by mass of the solid content in the composition.

5. The zirconium element-containing resin composition according to any one of claims 1 to 4, wherein a content ratio of the polymerizable resin (C) is 10 to 25 parts by mass with respect to 100 parts by mass of the solid content in the composition.

6. A cured product obtained by curing the zirconium element-containing resin composition according to any one of claims 1 to 5.
